# EUROPEAN PATENT APPLICATION

(11) **EP 1 336 475 A1**
(43) Date of publication of application: **20.08.2003**
(21) Application number: 02447024.7
(22) Date of filing: 15.02.2002
(51) Int. Cl.: B32B 27/32, B65D 65/40, B65D 75/58

(54) **Gas tight multilayered peelable polypropylene film**

(71) Applicant: Amcor Flexibles Transpac, 1160 Auderghem (BE)
(72) Inventor: Malfait, Tony, 8880 Rollegem-Kapelle (BE); Rosseau, Patrick, 1850 Crimbergen (BE); Bögels, Erik, 3620 Lanaken (BE); Veys, Luc, 9000 Gent (BE)
(74) Representative: Van Malderen, Joelle

(57) **Abstract**

The present invention is related to a coextruded multilayer polyolefin film being heat sealable and peelable onto polypropylene based substrates of at least 3 layers, comprising at least a peelable top layer, at least an intermediary layer and at least a base layer, characterised in that at least one of the intermediate layers comprises an easy flowable low melting polymer with a melt flow index at least equal or higher than the melt flow index of the base layer.

## Description

### Field of the invention

The present invention is related to a transparent coextruded gas tight peelable seal polyolefin film for packaging applications, and in particular for various types of standing pouches.

### State of the art

In gas-tight food packages different mixtures of gases are added to the content in order to retain the filled product properties such as aromas or freshness during the storage. This implies that the gas has to be kept in the package during the shelf life of the product. The packaging film or laminate constituting the package is therefore required to have low gas and aroma diffusion rates. Barrier properties of individual polymeric packaging materials and different product constructions thereof for various sorts of aromas and gasses, including water vapour, O₂, N₂, CO₂, are known in the prior art.

On the other hand the package should be produced in such a way that it is physically fully closed and that no leakages occur. Absence of leakages is therefore an essential characteristic for gas tight packaging applications. In packaging designs mainly the sealing areas are critical. If the seams are physically unsufficiently joined in the sealing area, the packages will have a high risk of leakages.

If a package in addition to be the gas-tight sealed should also allow an easier opening, the sealing film needs to have peelable characteristics. This implies that the seal strength of the seams cannot be infinite, but should be controllable in such a way that the film is of an easy opening type (e.g. opening without the use of scissors). Peelability and gas-tightness are characteristics that are difficult to match.

The US Patent 5,997,968 discloses a coextruded multilayer polyolefin film for lidding applications comprising an opaque base layer an intermediate layer, and a peelable layer of two incompatible polyolefins. Unfortunately, only one of both polyolefins are disclosed as a polypropylene, the other polymer is defined by its incompatibility with polypropylene and its melting range between 105 and 140°C. This large melting range and the fact that the polymer should be incompatible to the former does no give any indication about the nature of the second polyolefin.

This document further teaches the use of a thin intermediate layer of less than 12µm to avoid delamination and residues during the opening of the peel layer. These specific problems are not observed by the inventor in particular for non-oriented cast or blown coextruded films. Moreover the intermediate layer of 12 µm is too thin to represent a solution for gas tight and zero leakage rate packaging.

The documents US Patent 4,666,778 presents a laminar ethylenic peel layer based on a majority of ethylene polymers or copolymers. These films are not coextruded and have no peel properties on polypropylene based substrates.

### Aims of the invention

The present invention aims to provide a transparent peelable seal film presenting zero leakage properties within a package by introducing an easy flowable intermediary layer able to fill all gaps or voids created within the folds in the sealing area of a package.

### Summary of the invention

The present invention provides a coextruded multilayer polyolefin film, being heat sealable and peelable onto polypropylene based substrates, of at least 3 layers, comprising at least a peelable top layer, at least an intermediary layer and at least a base layer, characterised in that at least one of the intermediate layers comprises an easy flowable low melting polymer with a melt flow index at least equal or higher than the melt flow index of the base layer.

In a first embodiment of the present invention the coextruded multilayer film is characterised in that said easy flowable low melting polymer of at least one of the intermediary layers is selected from the group consisting of copolymers comprising propylene and ethylene, propylene and butylene, propylene and any other olefin having 5-10 carbon atoms.

In a second embodiment of the present invention the coextruded multilayer film is characterised in that said easy flowable low melting polymer of at least one of the intermediary layers is selected from the group consisting of polypropylene terpolymers containing ethylene, propylene, butylene or any other olefin having 5-10 carbon atoms.

In an additional embodiment of the present invention the coextruded multilayer film is characterised in that said easy flowable low melting polymer of at least one of the intermediary layers is selected from the group consisting of syndiotactic polypropylenes.

In a further embodiment of the present invention a coextruded multilayer film is characterised in that said easy flowable low melting polymer of at least one of the intermediary layers is selected from the group consisting of mixtures of the above said polymers with poly 1-butene homopolymers or poly 1-butene ethylene copolymers and/or homogeneous and heterogeneous ethylene alpha-copolymers with a density below 0.920.

Another key aspect of the present invention is that said base layer is selected from the group consisting of propylene homopolymers and copolymers of propylene and ethylene, propylene and butylene, propylene and any other olefin having 5-10 carbon atoms, or polypropylene terpolymers containing ethylene, propylene, butylene or any other olefin having 5-10 carbon atoms

An additional key aspect of the present invention is that the easy flowable low melting polymer represents at least 60% by weight of the total weight of the multilayer polymer film and that said film has a thickness of at least 15µm.

The present invention discloses also the use of a coextruded multilayer heat sealable and peelable polymer film in combination with diffusion tight films for gas tight packagings and for various types of gas tight standing pouches.

### Short description of the drawings

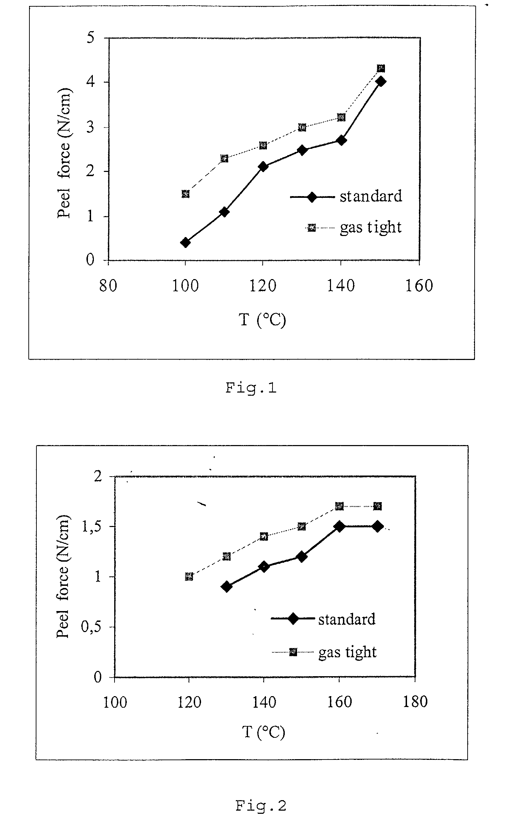

Fig. 1 represents the peel seal curve against itself versus the sealing temperature in a standard version (prior art) and according to the present invention (gas tight).

Fig. 2 represents the peel seal curve against BOPP versus the sealing temperature in a standard version (prior art) and according to the present invention (gas tight).

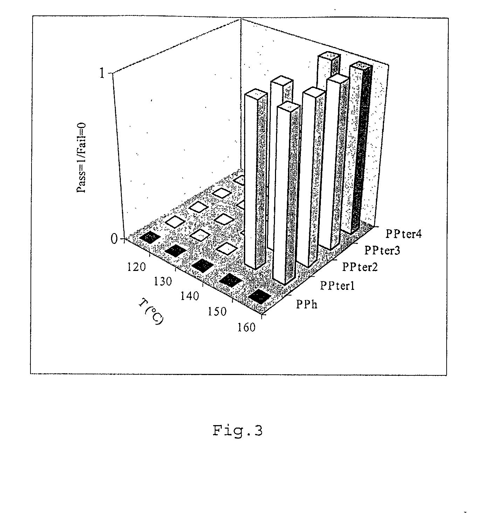

Fig. 3 represents the result of a leakage test in a comparison between the conventional peel film containing a PP homopolymer (PPh) core layer and the gas tight films containing an intermediate core layer with ethylene-butylene PP terpolymer and blends of ethylene-butylene PP terpolymer and homogeneous LLDPE (ρ=0.902) in a ratio 90/10 (PPter1), 75/25 (PPter2), 60/40 (PPter3) and 40/60 (PPter2).

### Detailed description of the invention

In the present invention zero leakages are provided by an intermediate coextruded layer between the peelable layer and the base layer. The intermediate layer contains a sufficient amount of easy-flowable low melting polymer. The thickness of such a film reaches approximately 40 µm and the seal/peal layer has only a thickness of approximately 5-8 µm. This means that the intermediate layer has a thickness of approximately 30 µm and the base layer a thickness of approximately 10 µm.

The intermediate layer in the present invention contains low melting PP polymers such as
- copolymers of propylene and ethylene, propylene and butylene, propylene and any other olefin having 5-10 carbon atoms, or
- polypropylene terpolymers containing ethylene, propylene, butylene or any other olefin having 5-10 carbon atoms, or
- syndiotactic polypropylene or
- mixtures of the above said polymers with poly 1-butene and/or homogeneous and heterogeneous branched ethylene alpha-copolymers with a density below 0.920 g/cm³.

The homogeneous and heterogeneous branched ethylene alpha-copolymers with a density below 0.920 g/cm³ should be selected as such that they are sufficiently compatible with the former in order to avoid a distortion of the film optics. Moreover a melt-index of the intermediate layer at least equal or higher than the one of the base layer helps to facilitate the flow during sealing. The melt indexes mentioned in this invention are measured according to ASTM D1238 at a temperature of 190°C and with a load of 2,16 Kg.

### Description of a preferred embodiment of the invention

An 19 µm OPP laminate containing e.g. a 40 µm coextruded film with a 8 µm peelable PP layer based on e.g. Novolen VP 9201 (MI=6, BASF) and a 14 µm homo PP core layer and 18 µm homo PP base layer containing respectively Moplen X30S (MI=8.5, p=0.905, Basell) and Stamylan P 16E10FC (MI=5.5, ρ=0.905, DSM) . This construction does not provide a gas-tight package.

A 19 µm OPP laminate however with a 6 µm peelable layer and a 26 µm core layer consisting of 60% Adsyl 5X37F (MI=7, ρ=0.905, Basell) and 40 % Exact 0203 (MI=3, ρ=0.902, Dex plastomers) combined with a base layer of 8 µm Moplen C30S (MI=6, ρ=0.905, Basell) will provide gas-tight packages.

A 19 µm OPP laminate with a 4 µm peelable layer, a 32 µm core layer containing 80% Adsyl 5X37F (MI=7, ρ=0.905, Basell) and 25% PB8220 (MI=2, ρ=0.897, Basell) and 4 µm Stamylan P 16E10FC (MI=5.5, ρ=0.905, DSM) as base layer will also result in a gas-tight package.

### Experimental sealing conditions

Prior to sealing the 40 µm peel seal films were laminated against a 20 µm standard coextruded BOPP film. Peel seal curves were performed on a Kopp sealer. Peelability against itself was evaluated with a pressure of 1.3 bar on the two heated jaws. The sealing dwell time corresponded with 0.5 sec. Peelability onto OPP was evaluated in an A to B sealing with the upper jaw heated and the lower containing a 60 shore A rubber at room temperature. The applied pressure corresponded with 1.3 bar applied during 1 sec.

### Leakage detection

In order to identify leakages small sachets were sealed according to the above sealing conditions. Prior to sealing a rhodamine solution was added to the sachets. The seals were considered as closed if no single visible migration of rhodamine was observed from the inside to the outside of the sacchets (pass-fail test). An alternative test is the under-water Dinkelberg leakage tester with an applied under-pressure (300-760 mbar) selected as such that it does not peel open the package.

## Claims

1. A coextruded multilayer polyolefin film being heat sealable and peelable onto polypropylene based substrates of at least 3 layers, comprising at least a peelable top layer, at least an intermediary layer and at least a base layer, **characterised in that** at least one of the intermediate layers comprises an easy flowable low melting polymer with a melt flow index at least equal or higher than the melt flow index of the base layer.

2. A coextruded multilayer film as in claim 1, **characterised in that** said easy flowable low melting polymer of at least one of the intermediary layers is selected from the group consisting of copolymers comprising propylene and ethylene, propylene and butylene, propylene and any other olefin having 5-10 carbon atoms.

3. A coextruded multilayer film as in claim 1, **characterised in that** said easy flowable low melting polymer of at least one of the intermediary layers is selected from the group consisting of polypropylene terpolymers containing ethylene, propylene, butylene or any other olefin having 5-10 carbon atoms.

4. A coextruded multilayer film as in claim 1, **characterised in that** said easy flowable low melting polymer of at least one of the intermediary layers is selected from the group consisting of syndiotactic polypropylenes.

5. A coextruded multilayer film as in claim 1, **characterised in that** said easy flowable low melting polymer of at least one of the intermediary layers is selected from the group consisting of mixtures of the above said polymers with poly 1-butene homopolymers or poly 1-butene ethylene copolymers and/or homogeneous and heterogeneous ethylene alpha-copolymers with a density below 0.920 g/cm³.

6. A coextruded multilayer film as in claim 1, **characterised in that** said base layer is selected from the group consisting of propylene homopolymers and copolymers of propylene and ethylene, propylene and butylene, propylene and any other olefin having 5-10 carbon atoms, or polypropylene terpolymers containing ethylene, propylene, butylene or any other olefin having 5-10 carbon atoms.

7. A coextruded multilayer film as in claim 1, wherein the easy flowable low melting polymer represents at least 60% by weight of the total weight of the multilayer polymer film.

8. A coextruded multilayer film as in claim 1, wherein the easy flowable later has a thickness of at least 15µm.

9. Gas tight packagings comprising a film as in any of the previous claims.

10. Use of a coextruded multilayer heat sealable and peelable polymer film as defined in any of the previous claims 1 to 8 in combination with diffusion tight films for gas tight packagings.

11. Use of a coextruded multilayer heat sealable and peelable polymer film as in any of the previous claims 1 to 8 for various types of gas tight standing pouches.
